# EUROPÄISCHE PATENTSCHRIFT

(11) **EP 2 002 109 B1**
(45) Veröffentlichungstag und Bekanntmachung des Hinweises auf die Patenterteilung: **16.03.2011**
(21) Anmeldenummer: 08708464.6
(22) Anmeldetag: 30.01.2008
(51) Int. Cl.: F02M 37/10

(54) **FÖRDEREINHEIT**
DELIVERY UNIT
UNITÉ D'ACHEMINEMENT

(30) Priorität: 13.02.2007 DE 102007007597; 21.01.2008 DE 102008005358
(43) Veröffentlichungstag der Anmeldung: 17.12.2008
(73) Patentinhaber: Continental Automotive GmbH, 30165 Hannover (DE)
(72) Erfinder: FROEHLICH, Walter, 60439 Frankfurt Am Main (DE); RAUCHHAUS, Günter, 65479 Raunheim (DE); SIPPEL, Thomas, 36037 Fulda (DE)
(86) Internationale Anmeldenummer: PCT/EP2008/051149
(87) Internationale Veröffentlichungsnummer: WO 2008/098840

(56) Entgegenhaltungen:
- JP-A- 9 268 957
- JP-A- 2003 172 218
- JP-A- 2003 286 925
- JP-A- 2004 285 930
- US-A1- 2004 112 819
- US-A1- 2006 272 619

## Beschreibung

Gegenstand der Erfindung ist eine Fördereinheit zum Fördern von Kraftstoff aus einem Kraftstoffbehälter zu einer Brennkraftmaschine eines Kraftfahrzeugs mit einer Kraftstoffpumpe, welche in einem Schwalltopf angeordnet ist und einem Flansch, welcher eine Öffnung des Kraftstoffbehälter verschließt, wobei der Schwalltopf mit dem Flansch über mindestens zwei Abstützelemente mit dem Schwalltopf verbunden ist.

Derartige Fördereinheiten sind seit langem bekannt und somit Stand der Technik. Dazu ist es bekannt, die Abstützelemente als Metallrohre auszubilden. Die Abstützelemente werden mittels Presspassung in Aufnahmebuchsen im Flansch eingepresst. Der Schwalltopf besitzt an seinem Umfang entsprechende Führungen, in denen die Abstützelemente längsverschieblich geführt sind. Die Abstützelemente umgebende Spiralfedern, welche sich mit einem Ende am jeweiligen Abstützelement oder am Flansch und mit dem anderen Ende am Schwalltopf abstützen, bewirken, dass der Schwalltopf gegen den Boden des Kraftstoffbehälters vorgespannt wird. Aufgrund vorgegebener Sicherheitsbestimmungen müssen Metallteile mit einer Kapazität größer als 3 pF gegen statische Aufladungen abgesichert sein. Das bedeutet, dass die Metallrohre geerdet sein müssen, wodurch der Aufwand für die Fördereinheit steigt.

Aus der US 2006/0272619 ist eine Fördereinheit bekannt, welche einen Flansch und einen Schwalltopf aufweist. Der Schwalltopf besitzt Führungen, in denen Verbindungselemente angeordnet sind. In diese Verbindungselemente greifen metallische Abstützelemente ein. Diese Art der Abstützung zeichnet sich durch einen aufwendigen Aufbau aus, der neben den erhöhten Herstellkosten zusätzlichen Montageaufwand erfordert.

Der vorliegenden Erfindung liegt daher die Aufgabe zugrunde, eine Fördereinheit mit geringem Aufwand vorzusehen.

Gelöst wird die Aufgabe dadurch, dass die Abstützelemente in Buchsen des Flansches eingepresst sind und aus einem kraftstoffbeständigen Kunststoff bestehen, wobei die Abstützelemente direkt mit dem Schwalltopf verbunden sind.

Durch die Wahl eines kraftstoffbeständigen Kunststoffs als Material für die Abstützelemente besitzen diese eine Kapazität kleiner als 3 pF. Somit müssen diese Bauteile gemäß den vorgegebenen Sicherheitsbestimmungen nicht zusätzlich gegen statische Aufladungen gesichert sein. Eine Erdung der Abstützelemente kann daher entfallen, wodurch sich der Aufwand für die Fördereinheit verringert.

Für den Einsatz in kraftstoffhaltigen Umgebungen haben sich als Kunststoffe Polyoxymethylen oder Polyamid bewährt, die sich darüber hinaus durch eine gute Verarbeitung insbesondere mittels Spritzgießens auszeichnen.

Zur weiteren Erhöhung der Sicherheit gegen elektrostatische Aufladungen, bzw. deren gefahrlose Ableitung ist es vorteilhaft, wenn der Kunststoff für die Abstützelemente Beimischungen von Kohlenstoff in Form von Ruß oder Nanotubes enthält.

Sofern der Schwalltopf und insbesondere die Führungen für die Abstützelemente ebenfalls aus Kunststoff bestehen, kann es bei einer Bewegung der Abstützelemente in den Führungen zu einer unerwünschten Geräuschentwicklung kommen. Eine derartige Geräuschentwicklung wird vermieden, wenn der Kunststoff für die Abstützelemente Beimischungen von Kreide enthält.

Um eine ausreichende Stabilität der Abstützelemente bei geringen Querschnittsabmessungen zu erhalten, hat es sich als vorteilhaft herausgestellt die Abstützelemente mit einer entlang ihrer Längsachse verlaufende Profilierung zu versehen.

Als Profile sind die unterschiedlichsten Formen denkbar. Neben Hohlprofilen haben sich aber auch Vollprofile bewährt. Ein geringer Materialeinsatz bei ausreichender Festigkeit wird gemäß einer vorteilhaften Ausgestaltung mit Abstützelementen erreicht, welche eine als Stege ausgebildete Profilierung aufweisen.

Die Befestigung der Abstützelemente gestaltet sich besonders einfach, wenn die Abstützelemente an ihrem dem Schwalltopf zugewandten Ende zumindest einen nach radial außen gerichteten Rasthaken aufweisen. Beim ersten Einführen der Abstützelemente in die Führungen des Schwalltopfes wird der zumindest eine Rasthaken reversibel verformt, bis er die Führung passiert hat. Anschließend bewegt er sich in seine Ausgangslage, wodurch das jeweilige Abstützelement gegen ein Lösen aus der Führung gesichert ist. Auf diese Weise lassen sich die Abstützelemente besonders einfach montieren.

An einem Ausführungsbeispiel wird die Erfindung näher erläutert. Dabei zeigen
- Figur 1:: eine erfindungsgemäße Fördereinheit und
- Figur 2, 3:: den Flansch der Fördereinheit gemäß Figur 1.

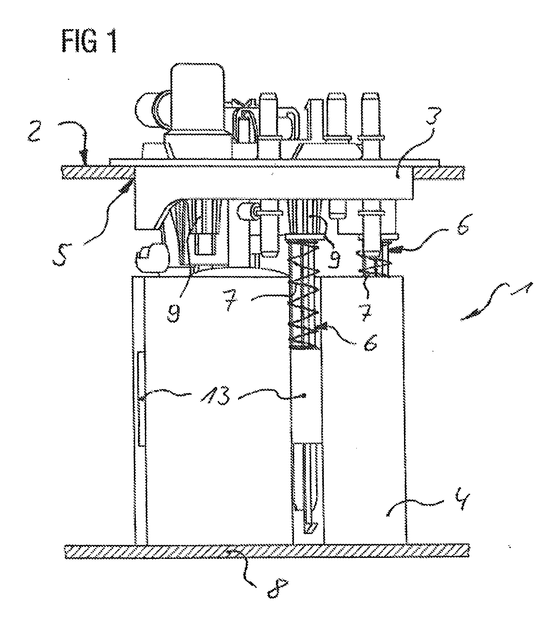

Figur 1 zeigt eine Fördereinheit 1 zum Einsatz in einem Kraftstoffbehälter 2 eines Kraftfahrzeugs. Die Fördereinheit 1 besteht aus einem Flansch 3 und einem Schwalltopf 4. Der Flansch 3 ist so gestaltet, dass er eine Öffnung 5 des Kraftstoffbehälters 2 verschließt, durch die die Fördereinheit 1 in dem Kraftstoffbehälter 2 eingesetzt wird. Im Schwalltopf 4 ist eine nicht dargestellte Kraftstoffpumpe angeordnet, welche Kraftstoff aus dem Schwalltopf 4 durch den Flansch 3 zu einer nicht dargestellten Brennkraftmaschine des Kraftfahrzeugs fördert. Am Umfang des Schwalltopfes 4 sind Führungen 13 angeordnet, in denen jeweils ein Abstützelement 6 eingreift. Jedes Abstützelement 6 ist von einer Schraubenfeder 7 umgeben. Die Schraubenfedern 7 stützen sich am Flansch 3 und an den Führungen 5 ab und bewirken auf diese Weise eine Vorspannung des Schwalltopfes 4 gegen den Boden 8 des Kraftstoffbehälters 2.

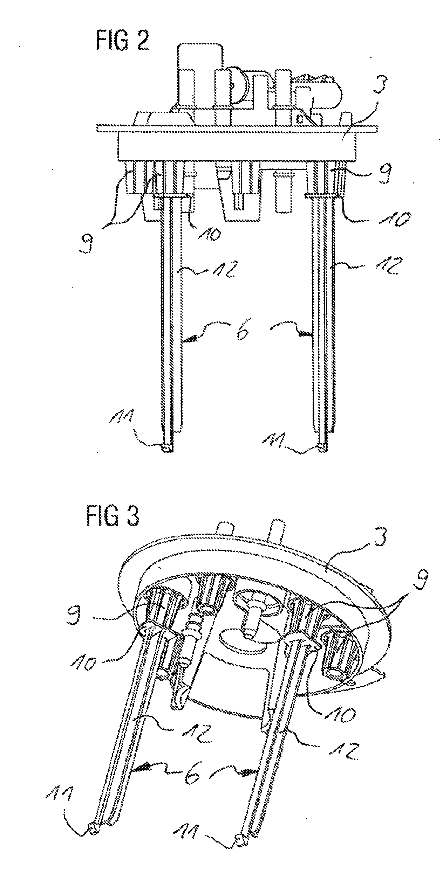

Die Figuren 2 und 3 zeigen den Flansch 3 mit den Abstützelementen 6. Zur Befestigung der Abstützelemente 6 besitzt der Flansch Buchsen 9, in die die Abstützelemente 6 eingepresst sind. Die Abstützelemente 6 weisen im oberen Bereich jeweils einen Bund 10 auf, der die Einschubtiefe der Abstützelemente 6 begrenzt. Gleichzeitig wird dadurch sichergestellt, dass jedes Abstützelement 6 gleich tief eingepresst ist und somit der Schwalltopf durch die Schraubenfedern 7 gegen alle Rasthaken 11 am unteren Ende der Abstützelemente 6 vorgespannt ist, bevor die Fördereinheit 1 im Kraftstoffbehälter 2 montiert wird. Die Abstützelemente 6 bestehen aus Polyamid. Zur Vermeidung elektrostatischer Aufladungen ist Kohlenstoff in Form von Ruß beigemischt. Zur mechanischen Verstärkung wissen die Abstützelemente 6 axial verlaufende Stege 12 auf. Darüber hinaus bilden die Stege 11 eine gute Führung für die Schraubenfedern.

## Patentansprüche

1. Fördereinheit zum Fördern von Kraftstoff aus einem Kraftstoffbehälter (2) zu einer Brennkraftmaschine eines Kraftfahrzeugs mit einer Kraftstoffpumpe, welche in einem Schwalltopf (4) angeordnet ist und einem Flansch (3), welcher eine Öffnung (5) des Kraftstoffbehälter verschließt, wobei der Schwalltopf mit dem Flansch über mindestens zwei Abstützelemente (6) mit dem Schwalltopf verbunden ist, wobei die Abstützelemente (6) in Buchsen (9) des Flansches eingepresst sind, **dadurch gekennzeichnet, dass** die Abstützelemente (6) aus einem kraftstoffbeständigen Kunststoff bestehen, wobei die Abstützelemente (6) direkt mit dem Schwalltopf verbunden sind.

2. Fördereinheit nach Anspruch 1, **dadurch gekennzeichnet, dass** die Abstützelemente (6) aus Polyoxymethylen oder Polyamid bestehen.

3. Fördereinheit nach Anspruch 1 und 2, **dadurch gekennzeichnet, dass** die Abstützelemente (6) Beimischungen von Kohlenstoff in Form von Ruß oder Nanotubes enthalten.

4. Fördereinheit nach zumindest einem der vorhergehenden Ansprüche 1 bis 3, **dadurch gekennzeichnet, dass** die Abstützelemente (6) aus einem kreidegefüllten Kunststoff bestehen.

5. Fördereinheit nach zumindest einem der vorhergehenden Ansprüche 1 bis 4, **dadurch gekennzeichnet, dass** die Abstützelemente (6) eine entlang ihrer Längsachse verlaufende Profilierung aufweisen.

6. Fördereinheit nach Anspruch 5, **dadurch gekennzeichnet, dass** die Abstützelemente (6) eine als Stege ausgebildete Profilierung aufweisen.

7. Fördereinheit nach zumindest einem der vorhergehenden Ansprüche 1 bis 6, **dadurch gekennzeichnet, dass** die Abstützelemente (6) an ihrem dem Schwalltopf zugewandten Ende zumindest ein nach radial außen gerichteten Rasthaken aufweisen.

## Claims

1. Delivery unit for delivering fuel from a fuel tank (2) to an internal combustion engine of a motor vehicle, with a fuel pump which is arranged in a swirl pot (4), and a flange (3) which closes an opening (5) of the fuel tank, wherein the swirl pot is connected to the flange via at least two supporting elements (6), and wherein the supporting elements (6) are pressed into bushings (9) of the flange, **characterized in that** the supporting elements (6) consist of a fuel-resistant plastic material, the supporting elements (6) being connected directly to the swirl pot.

2. Delivery unit according to Claim 1, **characterized in that** the supporting elements (6) consist of polyoxymethylene or polyamide.

3. Delivery unit according to Claims 1 and 2, **characterized in that** the supporting elements (6) contain admixtures of carbon in the form of soot or nanotubes.

4. Delivery unit according to at least one of the preceding Claims 1 to 3, **characterized in that** the supporting elements (6) consist of a chalk-filled plastic material.

5. Delivery unit according to at least one of the preceding Claims 1 to 4, **characterized in that** the supporting elements (6) have a profiling running along their longitudinal axis.

6. Delivery unit according to Claim 5, **characterized in that** the supporting elements (6) have a profiling designed as webs.

7. Delivery unit according to at least one of the preceding Claims 1 to 6, **characterized in that** the supporting elements (6), at their end facing the swirl pot, have at least one radially outwardly directed latching hook.

## Revendications

1. Unité de transfert permettant de transférer du carburant d'un réservoir à carburant (2) vers un moteur à combustion interne d'un véhicule automobile, comportant une pompe à carburant placée dans un pot d'accumulation (4) et une flasque (3), laquelle ferme une ouverture (5) du réservoir à carburant, le pot d'accumulation étant lié à la flasque par l'intermédiaire de au moins deux organes de soutien (6), les organes de soutien (6) étant enfoncés par force dans des douilles (9) de la flasque, **caractérisée par le fait que** les organes de soutien (6) sont en matière plastique résistant au carburant, les organes de soutien (6) étant liés directement avec le pot d'accumulation.

2. Unité de transfert selon la revendication 1, **caractérisée par le fait que** les organes de soutien (6) sont en polyoxyméthylène ou en polyamide.

3. Unité de transfert selon la revendication 1 et 2, **caractérisée par le fait que** les organes de soutien (6) renferment des additifs de carbone sous forme de noir de carbone ou de nanotubes de carbone.

4. Unité de transfert selon au moins l'une des revendications précédentes 1 à 3, **caractérisée par le fait que** les organes de soutien (6) sont en matière plastique chargée de craie.

5. Unité de transfert selon au moins l'une des revendications précédentes 1 à 4, **caractérisée par le fait que** les organes de soutien (6) ont un profil suivant leur axe longitudinal.

6. Unité de transfert selon la revendication 5, **caractérisée par le fait que** les organes de soutien (6) ont un profil conçu en tant que moulure.

7. Unité de transfert selon au moins l'une des revendications précédentes 1 à 6, **caractérisée par le fait que** les organes de soutien (6) comportent, à leur extrémité tournée vers le pot d'accumulation, au moins un crochet d'arrêt dirigé radialement vers l'extérieur.
